# EUROPEAN PATENT SPECIFICATION

(11) **EP 4 617 711 B1**
(45) Date of publication and mention of the grant of the patent: **06.05.2026**
(21) Application number: 24162995.5
(22) Date of filing: 12.03.2024
(51) Int. Cl.: G01S 7/40, G01S 7/497, G01S 13/931

(54) **LASER DEVICE, CALIBRATION OF LASER DEVICE AND VERIFICATION OF RADAR ALIGNMENT CALIBRATION**
LASERVORRICHTUNG, KALIBRIERUNG DER LASERVORRICHTUNG UND VERIFIZIERUNG DER RADARAUSRICHTUNGSKALIBRIERUNG
DISPOSITIF LASER, ÉTALONNAGE DE DISPOSITIF LASER ET VÉRIFICATION D'ÉTALONNAGE D'ALIGNEMENT RADAR

(43) Date of publication of application: 17.09.2025
(73) Proprietor: Aptiv Technologies AG, 8200 Schaffhausen (CH)
(72) Inventor: ABBRUZESE, Gianmarco, 2939 Schaffhausen (CH); ROEMHILD, Torsten, 2939 Schaffhausen (CH)
(74) Representative: Lewis Silkin LLP

(56) References cited:
- CN-A- 116 908 793
- US-A1- 2005 222 746
- US-A1- 2014 022 115
- BENDIX: "Instructions for the Vertical and Lateral Alignment of Bendix Radar Sensors", 1 September 2011 (2011-09-01), pages 1 - 6, XP007922332, Retrieved from the Internet <URL:http://www.bendix.com/media/documents/products_1/acb_1/wingmanadvanced/acbalignmenttool.pdf>

## Description

### Field

The present disclosure relates to estimating sensor misalignment, and particularly to verifying the calibration of the alignment of automotive radars. The present disclosure relates to a device for outputting one or more laser beams for use in determining automotive radar alignment. The present disclosure also relates to methods of calibrating the laser device, and of verifying radar calibration.

### Background

Many vehicles are equipped with radar systems in order to detect nearby obstacles or other vehicles, to enable autonomous driving functions to be performed, or to provide information to a driver. The radars are usually mounted to vehicles via brackets. The fitting of such brackets to a vehicle, and the fitting of radars to the brackets, creates a chain of manufacturing tolerances which is such that in practice, a radar's position may deviate from its optimum position after mounting. In such cases, the radar is considered to be misaligned from its design specification. Moreover, the deviation may differ from vehicle to vehicle.

There is therefore a need to check each vehicle, after production, to check for deviations in the alignment of the radars and to calibrate the vehicle to take any misalignment into account. Such a process is referred to herein as end-of-line calibration. Once deviations are identified, the vehicle's processors are calibrated to accommodate the determined deviations, for example by applying necessary mathematical offsets to radar signals. For example, if it is determined that the radar is elevated or has an azimuthal offset, with respect to the road surface and direction, from its ideal expected configuration, the frame of reference for radar calculations can be adjusted by reprogramming the vehicle's processors in order to compensate for this elevation deviation, so that the position of a detected object is calculated with respect to the true road surface and direction.

A problem arises, however, if the process of checking for deviations is itself subject to inaccuracies. In such circumstances, it is difficult to fully compensate for radar misalignment, as the ground truth for the radar's positioning is not known accurately. Laser-based techniques are conventionally used to mitigate this problem by seeking to optimise the accuracy of end-of-line calibration techniques. Such techniques, applicable in particular to front-looking radars, involve the mounting of a laser to the radar so that the radar alignment can be observed via the position of a co-aligned laser beam on a measurement chart. The mounting of the laser to the radar is complex, however, and difficulties may arise if there is insufficient space surrounding the radar installation to accommodate the laser. Further, mounting structures which are used are often heavy and the mounting itself can cause further radar misalignment, such as a change in elevation associated with the radar sinking under the weight of the mounting structure.

However, many radars are positioned behind a cover or fascia to conceal their appearance, which either prevents or complicates access to such radars to fit laser-mounting structures. There are also no known solutions to calibrate corner-concealed radars which have recently been installed on vehicle bumpers. US2005/222746 discloses an adaptive cruise control sensor subsystem alignment tool for a vehicle, comprises gauge pins with respective distal ends, arranged to define a plane with known orientation to illumination axis, defined by an illumination source. The point at which a visible laser light beam strikes a reference surface can reveal the alignment of the sensor sub-assembly with respect to the vehicle.

BENDIX: "Instructions for the Vertical and Lateral Alignment of Bendix Radar Sensors" discloses a system for vehicle radar sensor vertical and lateral alignment. US2014022115 discloses an apparatus for aligning forward-facing radar sensors in vehicles, comprising a receiver flag positioned in front of the forward-facing radar sensor, and laser beams perpendicular to the thrust line of the vehicle.

The present disclosure presents apparatus and methods to improve the ease and accuracy of verifying the calibration of radar alignment. Accuracy of 0.1° of error in any direction can be achieved.

According to a first aspect, there is provided a method of verifying calibration of automotive radar alignment, comprising replacing a radar sensor of a vehicle with a verification device having the same physical orientation with respect to the vehicle as the radar sensor, providing, via reflection by respective first and second surfaces of the verification device, a first laser beam and a second laser beam, wherein the first and second reflecting surfaces are adjacent to each other and are such that the first laser beam and the second laser beam are spaced apart in laterally spaced parallel planes, each plane perpendicular to a ground plane on which the vehicle is positioned, and such that the first laser beam is at a first elevation angle with respect to the ground plane, and the second laser beam is at a second elevation angle with respect to the ground plane, wherein the difference between the first elevation angle and the second elevation angle is at least 2 degrees, and wherein the verification device comprises recesses for accommodating first and second laser sources for the respective first and second laser beams, irradiating a target with the first laser beam and the second laser beam, determining a first target position at which the first laser beam is incident on the target, and determining a second target position at which the second laser beam is incident on the target, and determining an orientation of the radar sensor by comparing the first target position with a first reference position associated with the incidence of a first reference laser beam from the verification device at a reference orientation, and comparing the second target position with a second reference position associated with the incidence of a second reference laser beam from the verification device at the reference orientation, determining misalignment of the radar sensor using the difference between the determined orientation and the reference orientation, configuring the calibration of the radar sensor to compensate for determined misalignment.

In this way, a verification device can be used for all radars because if can fit into the installation space surrounding the radar sensor, due to the fact that it operates based on reflection of a laser beam. It is not necessary to co-align a laser source with the laser beam.

Further, it is possible to calculate lateral misalignment, as well as rotational misalignment about multiple axes.

It is also possible to position the target further from the verification device than the operating range of the radar sensor to be tested, such that divergence between the two laser beams increases and reduces the measurement errors.

In embodiments, the target is arranged such that the intersection of the boresight of the verification device with the target is at the midpoint of a line joining the first reference position and the second reference position.

In this way, a reference centroid is provided, based on calibration of the verification device, to serve as the basis of a comparison with measured orientation, and thus a determination of misalignment.

In embodiments, the method comprises measuring a first difference between an offset between the first target point and the second target point in a first direction, and an offset between the first reference point and the second reference point in the first direction, determining a pitch of the verification device, relative to the reference orientation, using the first difference, measuring a second difference between an offset between the first target point and the second target point in a second direction, and an offset between the first reference point and the second reference point in the second direction, determining a yaw of the verification device, relative to the reference orientation, using the second difference, wherein the first direction and second direction are perpendicular to each other and the second direction is perpendicular to the ground plane.

In this way, it is possible to determine misalignment in pitch and yaw using the same verification device that can determine lateral misalignment.

According to a second aspect, there is provided a verification device for verifying calibration of alignment of an automotive radar, comprising a frame, and mounting means for mounting to the verification device to a vehicle, wherein the mounting means are configured to mate with receiving means on the vehicle for receiving a radar sensor at a reference orientation, such that when the radar sensor is detached from the receiving means and the mounting means are attached to the receiving means, the verification device has the reference orientation, wherein the frame comprises a first surface for receiving and reflecting a first laser beam from a first laser source, and a second surface for receiving and reflecting a second laser beam from a second laser source, wherein the first and second reflecting surfaces are adjacent to each other, such that the verification device outputs a reflected first laser beam and a reflected second laser beam in laterally spaced parallel planes, each plane perpendicular to a ground plane on which the vehicle is positioned, wherein the first and second surfaces have angles of inclination, with respect to the ground plane, which are offset from each other by at least 2 degrees, such that the reflected first and second beams have different angles of elevation, and wherein the frame comprises recesses for accommodating the first and second laser sources.

Such a verification device avoids the need to integrate a laser chip into a conventional radar sensor to determine its alignment. The verification device can fit to a vehicle in the same manner as the radar sensor to be tested, and by reflecting a laser beam, it is not necessary to co-align a laser source with the laser beam.

Further, it is possible to calculate lateral misalignment, as well as rotational misalignment about multiple axes.

Further, it is possible to position the target further from the verification device than the operating range of the radar sensor to be tested, such that divergence between the two laser beams increases and reduces the measurement errors by a factor of ten.

In embodiments, the frame comprises aluminium. In this way, a lightweight structure is enabled which adopts a mounting configuration which is affected minimally by gravity, and which is a configuration that matches the mounting of the radar sensor to be tested.

According to a third aspect, there is provided a method of calibrating a verification device of the second aspect, the method comprising using the verification device to reflect and output first and second laser beams, positioning a target at a first distance from the verification device, determining the points of incidence of the reflected first and second laser beams on the target screen, positioning the target at a second distance from the verification device, determining the points of incidence of the reflected first and second laser beams on the target, determining the difference in elevation and azimuth of the reflected first and second laser beams using the points of incidence of the reflected first and second laser beams on the target at the first and second distances, and the difference between the first and second distances, and outputting calibration data defining the expected configuration of first and second reflected laser beams output by the verification device when the verification device is mounted to a vehicle at the reference orientation, wherein the first distance and the second distance are measured using two or more reference lasers.

In this way, errors or offsets associated with the verification device itself can be substantially eliminated, and accuracy of calibration is achieved.

### Brief Description of Drawings

Illustrative embodiments will now be described with reference to the drawings in which:
Figure 1 shows a front view of a verification device according a first embodiment;
Figure 2 shows a comparison of a verification device of a first embodiment, and a radar sensor whose alignment is to be calibrated by the verification device;
Figure 3 illustrates a system configuration employed for performing a method of calibrating a verification device according to a second embodiment;
Figure 4 is a flow chart illustrating a calibration method according to the second embodiment;
Figure 5 illustrates a target screen irradiated by laser beams in a verification method according a third embodiment; and
Figure 6 is a flow chart illustrating a verification method according to the third embodiment.

### Detailed Description

In embodiments of the present disclosure, a verification device is a structure by which calibration of a vehicle radar sensor can be verified through output of one or more laser beams representing the orientation of the radar sensor. The one or more laser beams are analysed in order to determine the orientation of the radar sensor and its misalignment from a reference orientation, such that the radar sensor can be calibrated correctly. In embodiments, the verification device is also referred to in the present disclosure as a 'laser device'.

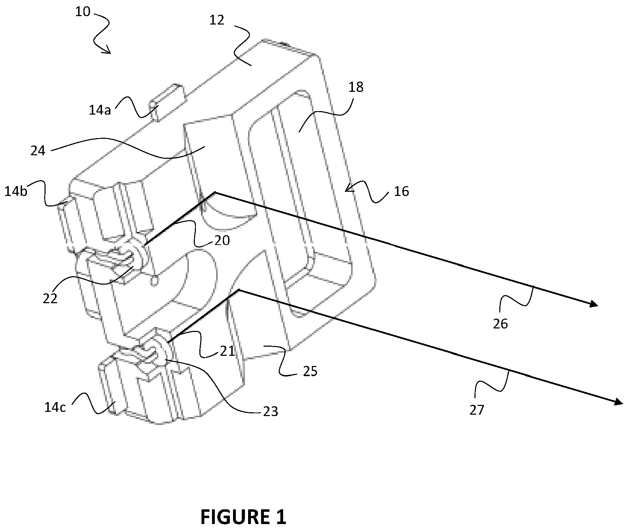

Figure 1 illustrates a front view of a verification device 10 according to a first embodiment. The verification device 10 comprises a frame or housing 12, from which protrude a plurality of fixing tabs 14a, 14b, 14c for coupling the verification device 10 to a vehicle having a corresponding plurality of sockets for receiving the fixing tabs 14a-c, whose radar sensor alignment is to be verified. The verification device 10 is configured for installation in the vehicle such that the front 16 of the verification device 10 shown in Figure 1 is the face of the verification device 10 which faces outwardly from the vehicle. As such, if the verification device 10 is installed at the front of the vehicle, the front surface 16 of the verification device 10 faces forwards from the vehicle. If the verification device 10 is installed at the rear of the vehicle, the front surface 16 of the verification device 10 faces rearwards from the vehicle.

The verification device 10 is installed in the vehicle by removing the radar sensor, and arranging the verification device 10 in place of the radar sensor. As such, the arrangement of the fixing tabs 14a-c corresponds to the positioning of fixing means employed by the radar sensor to be tested. The frame 12 of the verification device 10 has a physical shape which approximates the physical shape of the radar sensor's structure, and can thus be considered as a form of 'dummy' structure which corresponds to the physical structure of the removed radar sensor, but which lacks radar components. When the verification device 10 is installed in the vehicle, it has the same orientation as the radar sensor. The orientation of the verification device 10 is defined physically by its frame, and by the configuration of laser beams which are output from the verification device 10, in a manner described below.

A plurality of surface shapings 18, such as recesses, grooves, and apertures are present in the frame 12 of the verification device 10. These may have similarity to corresponding features of the structure of the radar sensor, but may also be introduced by way of facilitating manufacture of the verification device 10, and handling of the verification device 10 during installation in a vehicle. Such features can be produced using a technique such as additive manufacturing, in which common aspects of a shape configuration file may be adopted by a control system which drives the additive manufacturing process.

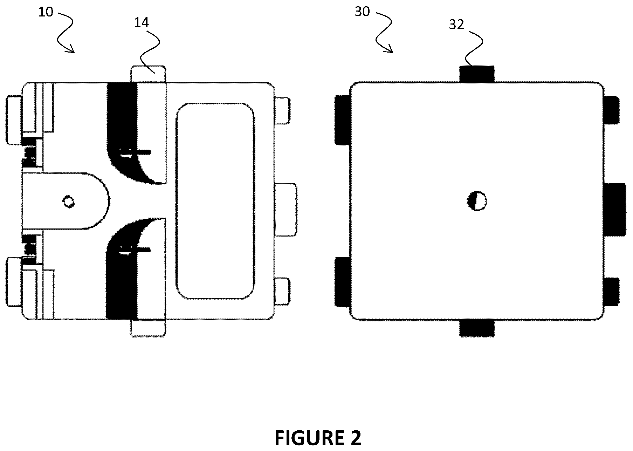

Figure 2 shows a comparison of the physical footprints of the structure of the verification device 10 of the first embodiment, and the radar sensor 30 whose alignment is to be verified by the verification device 10. The common configuration of the fixing tabs 14, 32 in both structures is clearly seen.

The frame 12 of the verification device 10 is plastic or lightweight aluminium, selected to approximate the weight of the radar sensor which has been removed, to ensure that it adopts the same position as the radar sensor when mounted to the vehicle. This avoids measurement errors associated with the weight of the verification device 10. In particular, such a lightweight configuration addresses difficulties in conventional systems, set out above, in which a heavy mounting structure applied to the radar sensor causes the radar sensor to sink or droop, introducing further offset to misalignments already present as a result of manufacturing processes. A further advantage of aluminimium includes robustness to any temperature influences.

The verification device 10 of the first embodiment receives two laser beams 20, 21 from a pair of laser sources 22, 23 which are accommodated in recesses in the frame 12. The laser sources 22, 23 are removable from the verification device 10. The laser source 22, 23 may be powered using an external source, or alternatively may derive power from the vehicle's power source when the verification device 10 is mounted to the vehicle, using electrical connections (not shown). The laser beams 20, 21 are reflected by first and second reflecting surfaces 24, 25, such as mirrors, for output from the verification device 10 as two test laser beams 26, 27.

By reflecting the laser beams 20, 21, it is not necessary to align the laser sources 22, 23 with the required direction of the test beams 26, 27, which may be difficult to do in the limited space surrounding the position of the verification device 10 once it is mounted to the vehicle. As such, freedom to match the verification device 10 structure with the structure of the radar sensor can be preserved as accommodation of the laser sources 22, 23 in the region of the vehicle to which the radar sensor is mounted is facilitated. Additionally, the removable laser sources 22, 23 can be readily controlled, even when the verification device 10 is installed in the vehicle.

In these ways, the verification device 10 of embodiments of the present disclosure is compatible with all automotive radar types, including front or rear-facing short range radars (SRRs), corner radars, and the like, in the absence of a spatial restriction needed to co-align laser sources 22, 23 with the test beams 26, 27 which are output.

The radar sensor is originally installed in the vehicle in a particular orientation. The particular orientation may have an expected amount of misalignment from an ideal or specified configuration. The expected misalignment derives from offsets in the manufacturing process, and such offsets are usually defined by a vehicle manufacturer on the basis of parameters associated with manufacturing equipment or methods, or analysis of manufactured products. The specified configuration is an orientation of the radar sensor, with respect to the vehicle, for which the positions of objects detected by the radar sensor can be accepted by an automotive control system as true positions with respect to the vehicle, the road surface and road direction, without offset or positional compensation. If the radar sensor is misaligned from the specified configuration, a corresponding offset or positional compensation associated with the manufacturer-defined expected misalignment is applied by the automotive control system in order to counteract the effect of the misalignment, so that detected objects are re-positioned with respect to the true frame of reference defined by the vehicle and the road surface, rather than a frame of reference defined by the radar sensor itself.

If, however, the radar sensor is in fact configured differently from the manufacturer's expectation, it is not possible to accurately compensate for radar's misalignment during operation of the vehicle. The verification device 10 of the first embodiment is used in order to verify the true deviation from an expected orientation of the radar sensor, so as to verify, and if necessary, re-calibrate one or more positional compensation algorithms. The verification device 10 operates in place of the radar sensor, and directs two laser beams at a target positioned at a predetermined distance from the verification device. By considering where the two laser beams reach the target, in comparison to where the two laser beams should be expected to reach the target if the verification device 10 were orientated in the same way as the radar sensor, the alignment of the radar sensor can be verified.

In order to ensure the accuracy of such verification, the verification device 10 is itself calibrated, prior to its use in radar sensor alignment verification, in a calibration method of a second embodiment. The calibration method operates to determine the expected position of the two laser beams when the verification device 10 is orientated in the same way as the radar sensor. The verification method is described in a third embodiment.

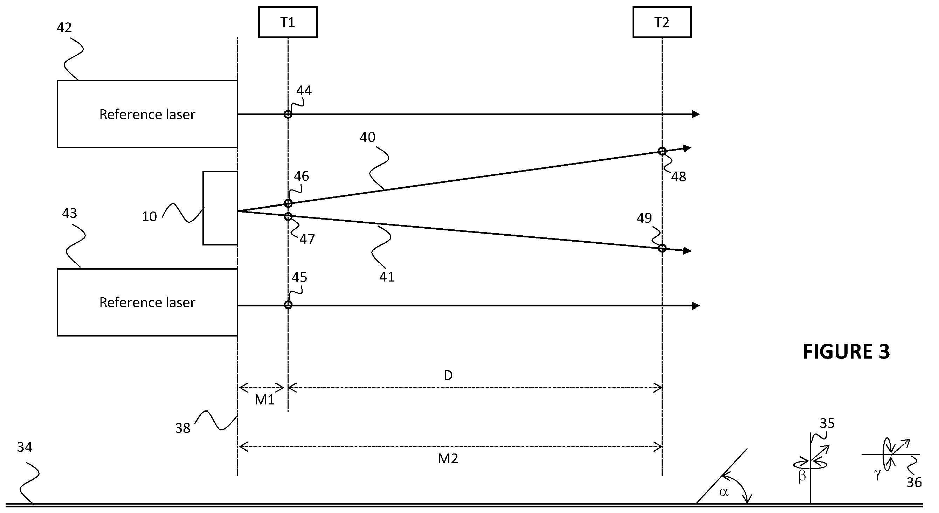

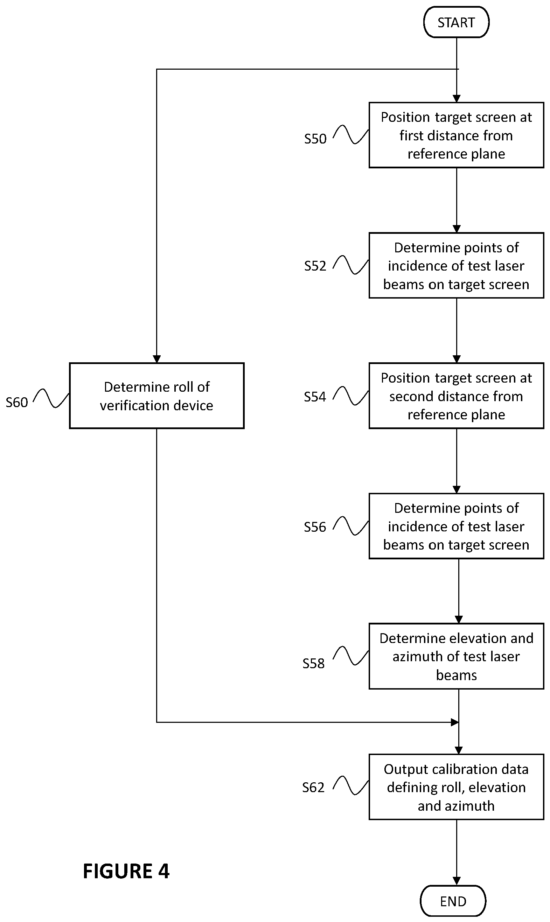

Figure 3 illustrates a system configuration of a calibration method according to a second embodiment of the present disclosure. The method is used to calibrate characteristics of the verification device 10 for use in methods of determining radar alignment. Figure 4 is a flow chart showing a calibration method according to the second embodiment.

Particularly, Figure 3 shows a side view of a verification device 10 of the first embodiment, outputting test laser beams 40, 41 from left to right across the Figure. A first reference laser 42 is arranged above the verification device 10, and a second reference laser 43 is arranged below the verification device 10.

The test laser beams 40, 41 have different angles of elevation from each other, relative to a road surface 34 which is nominally represented in Figure 3 as the horizontal direction, and the direction of travel of the vehicle. This directional convention is used throughout the present disclosure, and is shown in Figure 3, with pitch or elevation angle α shown in the plane of the Figure, with reference to the road surface 34, yaw or azimuth angle β shown as an angle from a reference (shown as a dotted line) about an axis 35 which is perpendicular to the road surface 34, and roll angle γ shown as an angle from a reference (shown as a dotted line) about an axis 36 which is parallel to the plane of the road surface 34 and which is perpendicular to the rotational axes for elevation α and yaw β.

The difference in elevation of the test beams 40, 41 is exaggerated, for simplicity of explanation, and in embodiment may be of the order of 2°. The difference is achieved by configuration of the first and second reflecting surfaces 24, 25, with the two reflecting surfaces 24, 25 having different angles of inclination from each other. The test laser beams 40, 41 propagate in two laterally spaced parallel planes perpendicular to the road surface 34 and the reference plane 38, the lateral spacing derived from the physical arrangement of the verification device shown in Figure 1.

In ideal circumstances, the configuration of the verification device 10 is such that the test laser beams 40, 41 have a predicted path, which is based on the orientation of the verification device 10. If there are manufacturing tolerances in the production of the verification device 10, the laser beams 40, 41 will be offset from these predicted paths, despite arranging the verification device 10 at a predetermined orientation. The calibration process operates to identify the difference between the measured positions of the laser beams 40, 41 and their predictions, so that this difference can be compensated for in the verification process.

In the second embodiment, in step S50 shown in Figure 4, a target screen is positioned at T1, which is a distance M1 from a reference plane 38 of the vehicle. The reference plane 38 may be a plane defined by characteristics of the vehicle, such a wheel axis or other feature of the chassis such as a frontal plane of the chassis, which can be identified from a vehicle's specifications. The reference plane 38 is selected to ensure consistency when testing radar sensors of vehicles of a common model or manufacturer, where the same reference plane 38 can be readily identified on each vehicle. The orientation of the verification device 10, relative to the reference plans 38, is confirmed using any suitable tilt measurement device.

The reference lasers 42, 43 are used to position the target screen by measuring distance M1 using a laser-ranging technique, at two different positions 44, 45 on the target screen. A line connecting the two positions is therefore parallel to the reference plane 38, as shown in Figure 3.

The test laser beams 40, 41 are used to irradiate the target screen, and the points of incidence 46, 47 of each laser beam 40, 41 is marked for subsequent analysis in step S52. The target screen may contain a grid pattern, so that a mark representing a point of incidence can be readily defined on the grid pattern to simplify subsequent analysis.

The target screen is then moved to position T2 in step S54, which is at distance M2 from the reference plane 38. Again, the reference lasers 42, 43 are used to ensure the correct positioning of the target plane in the manner described in relation to position T1.

The points of incidence 48, 49 of the test laser beams 40, 41 on the target screen are again marked in step S56. As will be clear from Figure 3, as the two test laser beams 40, 41 diverge, the distance between the points of incidence 48, 49 on the target screen at T2 will be greater than the distance between the points of incidence 46, 47 on the target screen at T1.

As a result of the measurements taken in the calibration process, it is possible to measure the elevation α of each of the laser beams 40 and 41, by consideration of the vertical difference between the marked positions 46, 47 and 48, 49 on the target screen, calculation of the distance D between M1 and M2, and trigonometric operation.

It is also possible to measure the azimuth, β of each of the laser beams 40 and 41, by consideration of the horizontal difference between the marked positions 46, 47 and 48, 49 on the target screen, calculation of the distance D between M1 and M2, and trigonometric operation. Elevation and azimuth differences are determined in step S58.

It will also be appreciated that the presence of a roll offset γ will effectively transfer a component of a horizontal offset in the marked positions 46, 47, 48 49 to a vertical offset, and similarly, will transfer a component of a vertical offset to an horizontal offset. As such, the roll offset γ of the verification device can also be inferred by comparison of the relative marked positions of each test beam 40, 41, with those of an expected position, for a given distance from the reference plane, and using trigonometric calculation.

In embodiments, the configuration of the verification device 10 and the reference lasers 42, 43 illustrated in Figure 3 is rotated about axis 36 such that the reference lasers 42, 43 are positioned either side of the verification device 10, rather than above and below the verification device. The target screen is also rotated about axis 36 in the same manner, at each of positions T1 and T2.

As a result of the calibration method of the second embodiment, a horizontal offset and a vertical offset between two test laser beams 40, 41 provided from a verification device 10 having a particular orientation, at a given distance from a reference plane. This information is output in step S62 for storage in a computing system for use with a radar sensor alignment verification method, to be described below. In embodiments, the information is provided to a tool such as Microsoft Excel.

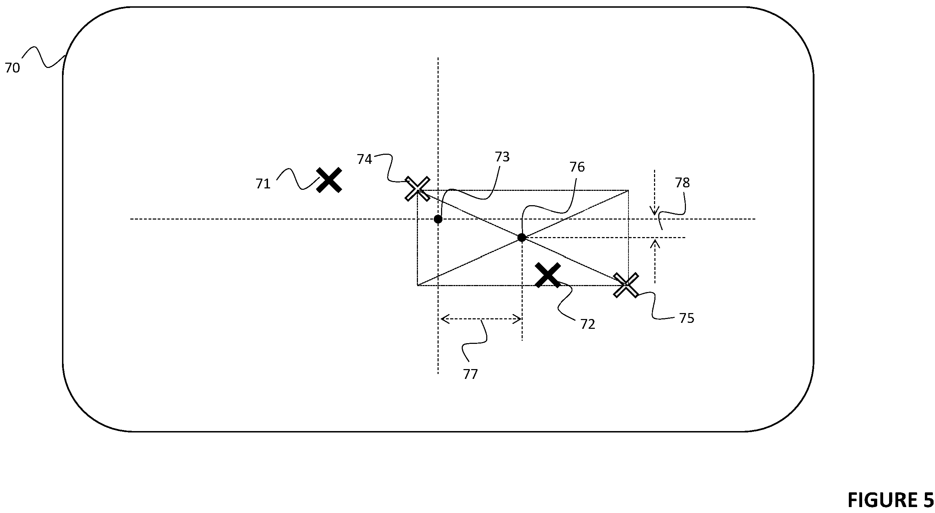

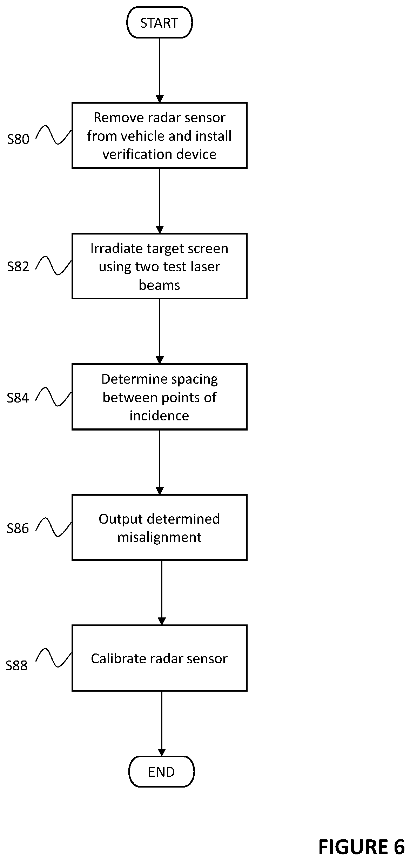

Figure 5 shows a target screen 70 which has been irradiated using test laser beams 26, 27 provided from the verification device 10 of the first embodiment, in a radar alignment calibration verification method according to a third embodiment of the present disclosure. The verification method is illustrated in the flow chart of Figure 6.

The target screen 70 is arranged at a test distance from a reference plane, which in the third embodiment is the same as the reference plane 38 used for the calibration method of the second embodiment, such that the calibration results can be used directly in the third embodiment. Looking along the boresight of the verification device 10, representing the direction faced by an average direction of the first and second laser beams 26, 27, the target screen 70 presents as a two-dimensional surface perpendicular to the boresight.

On the target screen 70 are marked expected positions 71, 72 of the incidence of laser beams of a verification device 10 aligned with the expected orientation of the radar sensor. Specifically, the azimuthal and elevation measurements for the two test laser beams 40, 41, derived using the calibration method of the second embodiment, are used to project estimations of where two test laser beams 26, 27 would be incident on the target screen 70, if the target screen 70 were to be placed at the test distance from the reference plane 38, and if the verification device 10 were to have the same orientation as the expected orientation of the radar sensor.

Such points of incidence are shown in Figure 5 as dark-shaded crosses 71 and 72. In the example shown in Figure 5, a reference centroid 73 is illustrated as the centre, in both the horizonal and vertical directions, between points 71 and 72, which can be understood as the point at which the boresight of the verification device 10 would be expected to intersect with the target screen 70.

In the radar alignment calibration verification of the third embodiment, a radar sensor is removed from a vehicle in step S80 shown in Figure 6, and a verification device 10 is mounted to the vehicle in the same orientation as the radar sensor. First and second laser sources 22, 23 supply laser beams 20, 21 to the verification device 10. The supplied laser beams 20, 21 are reflected by their respective first and second reflecting surfaces 24, 25 as test laser beams 26, 27 towards the target screen 70 in step S82. The target screen 70 is positioned at a distance from the reference plane 38 for which points of incidence 71 and 72 were calculated.

The points of incidence of the test laser beams 26, 27 are marked on the target screen 70 as light-shaded crosses 74, 75, as shown in Figure 5. In the absence of any misalignment of the radar sensor from what is expected, points 74 and 75 would correspond exactly to 71 and 72, such that the expected orientation of the radar sensor is verified.

In the example illustrated in Figure 5, however, the verification process determines the presence of misalignment instead. Points 74 and 75 are shifted to the right of 71 and 72 respectively, but have similar vertical positions. In the absence of any elevation or azimuth offsets, the shift in points 74 and 75 would be representative of a lateral shift in the original position of the radar sensor from what would be expected. By using two laser beams, however, it is possible to consider the relative shifts between pairs of points 71 and 74, and 72 and 75, and a difference between these relative shifts is indicative of rotational offset.

In detail, totational misalignment of the radar sensor can be inferred by measurement of the horizontal and vertical distances between points 74 and 75, and comparison of these spacings with the corresponding spacings between the reference points 71 and 72 in step S84. In particular, the pitch misalignment of the radar sensor is inferred by comparing the distance 77 between the reference centroid 73, and the midpoint 76 of a line joining points 74 and 75, in the vertical direction. The yaw misalignment of the radar sensor is inferred by similarly comparing the distance 78 between the reference centroid 73, and the midpoint 76 of a line joining points 74 and 75, in the horizontal direction.

The possibility of determining pitch and yaw misalignment arises due to the use of two offset test laser beams 26, 27 that diverge from each other with increasing distance from the reference plane 38. By comparing a measured divergence with an expected divergence, when projected onto the plane of the target screen 70, it is possible to verify the presence of a misalignment of the boresight between the two laser beams in multiple directions.

Once any misalignment is identified as a result of the method of the third embodiment, this is output in step S86 in any of a number of formats as information used to calibrate the operation of the radar sensor of the vehicle in step S88. The calibration of the radar sensor vehicle represents the calculation an offset to be applied to a position of an object detected by the radar sensor to a real-world frame of reference, such that automotive functions which rely on detection of such objects, such as avoidance of obstacles, distance sensing and the like, are performed correctly. The calibration is output to any suitable automotive control units or processors which control operation of the radar sensor which includes operations associated with processing information obtained by the radar.

In embodiments, the calibration of the radar sensor is performed using a mathematical algorithm which takes as its inputs the positions, on the target of points 71, 72, 74 and 75, the distance of the target from the reference plane of the vehicle, and information defining the type of radar sensor to be calibrated, and calculates lateral and angular compensations to be applied. In embodiments, the mathematical algorithm is performed by execution of instructions by a processor on a device such as a computer, hosting an application suitable for executing geometrical formulae and calculation routines. An example of such as application is Microsoft Excel. The algorithm is thus performed externally, with respect to automotive system, as part of a test environment, and the output the test environment is provided to controllers on-board the vehicle so that the required offsets are applied during use of the vehicle.

The methods described above are suitable for testing of radar sensor alignment at the stage of manufacturing a vehicle, or as part of a service or vehicle test performed on an ad-hoc or period basis during the lifetime of the vehicle. It will be appreciated that the position of a radar sensor may deviate with time due to the effect of, for example, vibrations experienced by the vehicle, and such deviations can be accounted for by performing first the calibration process of the second embodiment, and the then the verification process of the third embodiment. The nature of the calibration and verification processes is unchanged, provided that the verification device can be mounted to the vehicle in the same orientation as the radar sensor.

The method of the third embodiment takes advantage of the calibration method of the second embodiment, because it is possible to measure differences of the position of laser beams from known positions. This both simplifies the process of verifying alignment of the radar sensor, and ensures accuracy of the alignment results which are obtained as the verification device which is used is calibrated accurately before use. As a consequence of both the calibration method and the nature of the verification device 10 which is used, accuracy of 0.1° in alignment determination, in any direction, can be achieved.

It will be understood that the embodiments illustrated above show applications only for the purposes of illustration.

For example, the nature of the fixing tabs 14 on the verification device 10 will vary in dependence upon the radar sensor to be tested, and may include a combination of tabs, recesses, or other coupling means which match the structure of the radar sensor. The number and distribution of the fixing means of the verification device 10 may therefore be configured accordingly. In embodiments, the radar sensor to be replaced by a verification device is mounted to a vehicle using via an intermediate bracket. In such cases, the use of a lightweight verification device 10 is particularly advantageous as a bracket-mounted structure might be particularly prone to drooping or sinking effects if a laser source were mounted to it.

It will be appreciated that accuracy can be enhanced by increasing the distance between the reference plane and the target screen. By doing so, the divergence between the two laser beams 26, 27 will increase at the point of incidence on the target screen 70, and the relative effect of measurement errors on the calculation processes is decreased. In embodiments, the target screen 70 is positioned at a distance which is of the order of ten times further from the reference plane than the typical operating range of the radar sensor, causing a scaling of a factor of ten of the divergence between the points of incidence of the laser beams on the target screen 70, and a corresponding tenfold reduction in the effect of measurement errors.

## Claims

1. A method of verifying calibration of automotive radar alignment, comprising:
replacing (S80) a radar sensor of a vehicle with a verification device (10) having the same physical orientation with respect to the vehicle as the radar sensor;
providing, via reflection by respective first (24) and second (25) reflecting surfaces of the verification device, a first laser beam (26) and a second laser beam (27), wherein the first and second reflecting surfaces are adjacent to each other and are such that the first laser beam and the second laser beam are spaced apart in laterally spaced parallel planes, each plane perpendicular to a ground plane (34) on which the vehicle is positioned, and such that the first laser beam is at a first elevation angle with respect to the ground plane, and the second laser beam is at a second elevation angle with respect to the ground plane, wherein the difference between the first elevation angle and the second elevation angle is at least 2 degrees, and wherein the verification device comprises recesses for accommodating first (21) and second (22) laser sources for the respective first and second laser beams;
irradiating (S82) a target screen (70) with the first laser beam and the second laser beam, determining a first target position (74) at which the first laser beam is incident on the target screen, and determining a second target position (75) at which the second laser beam is incident on the target screen; and
determining an orientation of the radar sensor by comparing the first target position with a first reference position (71) associated with the incidence of a first reference laser beam on the target screen from the verification device at a reference orientation, and comparing the second target position with a second reference position (72) associated with the incidence of a second reference laser beam on the target screen from the verification device at the reference orientation;
determining misalignment of the radar sensor using the difference between the determined orientation and the reference orientation;
configuring the calibration of the radar sensor to compensate for determined misalignment.

2. A method according to claim 1, wherein the target screen (70) is arranged such that the intersection of the boresight of the verification device (10) with the target screen is at the midpoint (73) of a line joining the first reference position (71) and the second reference position (72).

3. A method according to claim 2, further comprising:
measuring a first difference between an offset (77) between the first target point (74) and the second target point (75) in a first direction, and an offset between the first reference point and the second reference point in the first direction;
determining a pitch of the verification device, relative to the reference orientation, using the first difference;
measuring a second difference between an offset (78) between the first target point and the second target point in a second direction, and an offset between the first reference point and the second reference point in the second direction;
determining a yaw of the verification device, relative to the reference orientation, using the second difference;
wherein the first direction and second direction are perpendicular to each other and the second direction is perpendicular to the ground plane (34).

4. A verification device (10) for verifying calibration of alignment of an automotive radar, comprising:
a frame (12); and
mounting means (14a-c) for mounting to the verification device to a vehicle;
wherein the mounting means are configured to mate with receiving means on the vehicle for receiving a radar sensor at a reference orientation, such that when the radar sensor is detached from the receiving means and the mounting means are attached to the receiving means, the verification device has the reference orientation;
wherein the frame comprises a first surface (24) for receiving and reflecting a first laser beam (26) from a first laser source, and a second surface (25) for receiving and reflecting a second laser beam (27) from a second laser source, wherein the first and second reflecting surfaces are adjacent to each other and arranged such that the verification device outputs a reflected first laser beam and a reflected second laser beam in laterally spaced parallel planes, each plane perpendicular to a ground plane (34) on which the vehicle is positioned, wherein the first and second surfaces have angles of inclination, with respect to the ground plane, which are offset from each other by at least 2 degrees, such that the reflected first and second beams have different angles of elevation;
wherein the frame comprises recesses for accommodating the first and second laser sources.

5. A verification device according to claim 4, wherein the frame (12) comprises aluminium.

6. A method of calibrating a verification device according to claim 4 or claim 5, the method comprising:
using the verification device (10) to reflect and output first and second laser beams (40, 41);
(S50) positioning a target screen (70) at a first distance (M1) from the verification device;
(S52) determining the points of incidence (46, 47) of the reflected first and second laser beams on the target screen;
(S54) positioning the target screen at a second distance (M2) from the verification device;
(S56) determining the points of incidence (48, 49) of the reflected first and second laser beams on the target screen;
(S58) determining the difference in elevation and azimuth of the reflected first and second laser beams using the points of incidence of the reflected first and second laser beams on the target screen at the first and second distances, and the difference (D) between the first and second distances; and
(S62) outputting calibration data defining the expected configuration of first and second reflected laser beams output by the verification device when the verification device is mounted to a vehicle at the reference orientation,
wherein the first distance (M1) and the second distance (M2) are measured using two or more reference lasers (42, 43).

## Patentansprüche

1. Verfahren zum Überprüfen der Kalibrierung einer Ausrichtung eines Fahrzeugradars, umfassend:
Ersetzen (S80) eines Radarsensors eines Fahrzeugs durch eine Verifizierungsvorrichtung (10) mit derselben physischen Ausrichtung zum Fahrzeug wie der Radarsensor;
Bereitstellen, durch Reflexion an der jeweiligen ersten (24) und zweiten (25) Reflexionsfläche der Verifizierungsvorrichtung, eines ersten Laserstrahls (26) und eines zweiten Laserstrahls (27), wobei die erste und die zweite Reflektionsfläche nebeneinander liegen und so beschaffen sind, dass der erste Laserstrahl und der zweite Laserstrahl in seitlich beabstandeten parallelen Ebenen voneinander entfernt sind, wobei jede Ebene senkrecht zu einer Grundfläche (34) steht, auf der das Fahrzeug positioniert ist, und so beschaffen ist, dass der erste Laserstrahl in einem ersten Elevationswinkel zur Grundfläche steht und der zweite Laserstrahl in einem zweiten Elevationswinkel zur Grundfläche steht, wobei die Differenz zwischen dem ersten Elevationswinkel und dem zweiten Elevationswinkel mindestens 2 Grad beträgt und wobei die Verifizierungsvorrichtung Aussparungen zur Aufnahme einer ersten (21) und einer zweiten (22) Laserquelle für den jeweiligen ersten und zweiten Laserstrahl umfasst;
Bestrahlen (S82) eines Zielschirms (70) mit dem ersten Laserstrahl und dem zweiten Laserstrahl, Bestimmen einer ersten Zielposition (74), an der der erste Laserstrahl auf den Zielschirm trifft, und Ermitteln einer zweiten Zielposition (75), an der der zweite Laserstrahl auf den Zielschirm trifft; und
Bestimmen einer Ausrichtung des Radarsensors durch Vergleichen der ersten Zielposition mit einer ersten Referenzposition (71), die mit dem Auftreffen eines ersten Referenzlaserstrahls von der Verifizierungsvorrichtung auf den Zielschirm in einer Referenzausrichtung verbunden ist, und Vergleichen der zweiten Zielposition mit einer zweiten Referenzposition (72), die mit dem Auftreffen eines zweiten Referenzlaserstrahls von der Verifizierungsvorrichtung auf den Zielschirm in der Referenzausrichtung verbunden ist;
Bestimmen einer Fehlausrichtung des Radarsensors unter Verwendung der Differenz zwischen der ermittelten Ausrichtung und der Referenzausrichtung;
Konfigurieren der Kalibrierung des Radarsensors, um festgestellte Fehlausrichtungen auszugleichen.

2. Verfahren nach Anspruch 1, wobei der Zielschirm (70) so angeordnet ist, dass der Schnittpunkt der Sichtlinie der Verifizierungsvorrichtung (10) mit dem Zielschirm im Mittelpunkt (73) einer Verbindungslinie zwischen der ersten Referenzposition (71) und der zweiten Referenzposition (72) liegt.

3. Verfahren nach Anspruch 2, ferner umfassend:
Messen einer ersten Differenz zwischen einem Versatz (77) zwischen dem ersten Zielpunkt (74) und dem zweiten Zielpunkt (75) in einer ersten Richtung und einem Versatz zwischen dem ersten Referenzpunkt und dem zweiten Referenzpunkt in der ersten Richtung;
Bestimmen einer Neigung der Verifizierungsvorrichtung relativ zur Referenzausrichtung unter Verwendung der ersten Differenz;
Messen einer zweiten Differenz zwischen einem Versatz (78) zwischen dem ersten Zielpunkt und dem zweiten Zielpunkt in einer zweiten Richtung und einem Versatz zwischen dem ersten Referenzpunkt und dem zweiten Referenzpunkt in der zweiten Richtung;
Bestimmen eines Gierwerts der Verifizierungsvorrichtung relativ zur Referenzausrichtung unter Verwendung der zweiten Differenz;
wobei die erste Richtung und die zweite Richtung senkrecht zueinander stehen und die zweite Richtung senkrecht zur Grundfläche (34) verläuft.

4. Verifizierungsvorrichtung (10) zum Überprüfen einer Kalibrierung der Ausrichtung eines Fahrzeugradars, umfassend:
einen Rahmen (12); und
Befestigungsvorrichtungen (14a-c) zum Befestigen der Verifizierungsvorrichtung an einem Fahrzeug;
wobei die Befestigungsvorrichtungen so konfiguriert sind, dass sie mit Aufnahmevorrichtungen am Fahrzeug zusammenpassen, um einen Radarsensor in einer Referenzausrichtung aufzunehmen, sodass die Verifizierungsvorrichtung die Referenzausrichtung einnimmt, wenn der Radarsensor von der Aufnahmevorrichtung gelöst und die Befestigungsvorrichtungen an den Aufnahmevorrichtungen angebracht werden;
wobei der Rahmen eine erste Fläche (24) umfasst, um einen ersten Laserstrahl (26) von einer ersten Laserquelle aufzunehmen und zu reflektieren, und eine zweite Fläche (25), um einen zweiten Laserstrahl (27) von einer zweiten Laserquelle aufzunehmen und zu reflektieren, wobei die erste und die zweite Reflektorfläche nebeneinander liegen und so angeordnet sind, dass die Verifizierungsvorrichtung einen reflektierten ersten Laserstrahl und einen reflektierten zweiten Laserstrahl in seitlich beabstandeten parallelen Ebenen ausgibt, wobei jede Ebene senkrecht zu einer Grundfläche (34) steht, auf der das Fahrzeug positioniert ist, wobei die erste und die zweite Fläche Neigungswinkel in Bezug auf die Grundfläche aufweisen, die um mindestens 2 Grad zueinander versetzt sind, so dass der reflektierte erste und zweite Strahl unterschiedliche Elevationswinkel aufweisen;
wobei der Rahmen Aussparungen für das Aufnehmen der ersten und der zweiten Laserquelle umfasst.

5. Verifizierungsvorrichtung nach Anspruch 4, wobei der Rahmen (12) Aluminium umfasst.

6. Verfahren zum Kalibrieren einer Verifizierungsvorrichtung nach Anspruch 4 oder Anspruch 5, das Verfahren umfassend:
Verwenden der Verifizierungsvorrichtung (10), um einen ersten und zweiten Laserstrahl (40, 41) zu reflektieren und auszugeben;
(S50) Positionieren eines Zielschirms (70) in einem ersten Abstand (M1) von der Verifizierungsvorrichtung;
(S52) Bestimmen der Auftreffpunkte (46, 47) des reflektierten ersten und zweiten Laserstrahls auf dem Zielschirm;
(S54) Positionieren des Zielschirms in einem zweiten Abstand (M2) von der Verifizierungsvorrichtung;
(S56) Bestimmen der Auftreffpunkte (48, 49) des reflektierten ersten und zweiten Laserstrahls auf dem Zielschirm;
(S58) Bestimmen des Höhen- und Azimutunterschieds des reflektierten ersten und zweiten Laserstrahls anhand der Auftreffpunkte des reflektierten ersten und zweiten Laserstrahls auf dem Zielschirm bei der ersten und zweiten Entfernung sowie der Differenz (D) zwischen der ersten und der zweiten Entfernung; und
(S62) Ausgeben von Kalibrierungsdaten, die die erwartete Konfiguration des ersten und zweiten reflektierten Laserstrahls definieren, die von der Verifizierungsvorrichtung ausgegeben werden, wenn die Verifizierungsvorrichtung in der Referenzausrichtung an einem Fahrzeug angebracht ist,
wobei der erste Abstand (M1) und der zweite Abstand (M2) unter Verwendung von zwei oder mehr Referenzlasern (42, 43) gemessen werden.

## Revendications

1. Procédé de vérification de l'étalonnage de l'alignement de radar automobile, comprenant :
le remplacement (S80) d'un capteur radar d'un véhicule par un dispositif de vérification (10) présentant la même orientation physique par rapport au véhicule que le capteur radar ;
la fourniture, par l'intermédiaire de la réflexion par des première (24) et seconde (25) surfaces réfléchissantes respectives du dispositif de vérification, un premier faisceau laser (26) et un second faisceau laser (27), dans lequel les première et seconde surfaces réfléchissantes sont adjacentes l'une à l'autre et sont telles que le premier faisceau laser et le second faisceau laser sont espacés dans des plans parallèles latéralement espacés, chaque plan étant perpendiculaire au plan du sol (34) sur lequel le véhicule est positionné, et de sorte que le premier faisceau laser est à un premier angle d'élévation par rapport au plan du sol, et le second faisceau laser est à un second angle d'élévation par rapport au plan du sol, dans lequel la différence entre le premier angle d'élévation et le second angle d'élévation est d'au moins 2 degrés, et dans lequel le dispositif de vérification comprend des évidements destinés à recevoir des première (21) et seconde (22) sources laser pour les premier et second faisceaux laser respectifs ;
l'irradiation (S82) d'un écran cible (70) avec le premier faisceau laser et le second faisceau laser, la détermination d'une première position cible (74) à laquelle le premier faisceau laser est incident sur l'écran cible, et la détermination d'une seconde position cible (75) à laquelle le second faisceau laser est incident sur l'écran cible ; et
la détermination d'une orientation du capteur radar en comparant la première position cible à une première position de référence (71) associée à l'incidence d'un premier faisceau laser de référence sur l'écran cible provenant du dispositif de vérification à une orientation de référence, et la comparaison de la seconde position cible à une seconde position de référence (72) associée à l'incidence d'un second faisceau laser de référence sur l'écran cible provenant du dispositif de vérification à l'orientation de référence ;
la détermination du désalignement du capteur radar à l'aide de la différence entre l'orientation déterminée et l'orientation de référence ;
la configuration de l'étalonnage du capteur radar pour compenser le désalignement déterminé.

2. Procédé selon la revendication 1, dans lequel l'écran cible (70) est agencé de sorte que l'intersection de la ligne de visée du dispositif de vérification (10) avec l'écran cible se trouve au point milieu (73) d'une ligne joignant la première position de référence (71) et la seconde position de référence (72).

3. Procédé selon la revendication 2 comprenant en outre :
la mesure d'une première différence entre un décalage (77) entre le premier point cible (74) et le second point cible (75) dans une première direction, et un décalage entre le premier point de référence et le second point de référence dans la première direction ;
la détermination d'un pas du dispositif de vérification par rapport à l'orientation de référence, à l'aide de la première différence ;
la mesure d'une seconde différence entre un décalage (78) entre le premier point cible et le second point cible dans une seconde direction, et un décalage entre le premier point de référence et le second point de référence dans la seconde direction ;
la détermination d'un lacet du dispositif de vérification par rapport à l'orientation de référence, à l'aide de la seconde différence ;
dans lequel la première direction et la seconde direction sont perpendiculaires l'une à l'autre et la seconde direction est perpendiculaire au plan du sol (34).

4. Dispositif de vérification (10) destiné à vérifier l'étalonnage de l'alignement d'un radar automobile, comprenant :
un cadre (12) ; et
un moyen de montage (14 a-c) destiné à monter le dispositif de vérification sur un véhicule ;
dans lequel le moyen de montage est conçu pour s'accoupler avec un moyen de réception sur le véhicule destiné à recevoir un capteur radar dans une orientation de référence, de sorte que lorsque le capteur radar est détaché du moyen de réception et que le moyen de montage est fixé au moyen de réception, le dispositif de vérification présente l'orientation de référence ;
dans lequel le cadre comprend une première surface (24) destinée à recevoir et à réfléchir un premier faisceau laser (26) provenant d'une première source laser, et une seconde surface (25) destinée à recevoir et à réfléchir un second faisceau laser (27) provenant d'une seconde source laser, dans lequel les première et seconde surfaces réfléchissantes sont adjacentes l'une à l'autre et agencées de sorte que le dispositif de vérification émet un premier faisceau laser réfléchi et un second faisceau laser réfléchi dans des plans parallèles espacés latéralement, chaque plan perpendiculaire à un plan du sol (34) sur lequel le véhicule est positionné, dans lequel les première et seconde surfaces présentent des angles d'inclinaison, par rapport au plan du sol, qui sont décalés l'un par rapport à l'autre d'au moins 2 degrés, de sorte que les premier et second faisceaux réfléchis présentent des angles d'élévation différents ;
dans lequel le cadre comprend des évidements destinés à recevoir les première et seconde sources laser.

5. Dispositif de vérification selon la revendication 4, dans lequel le cadre (12) comprend de l'aluminium.

6. Procédé d'étalonnage d'un dispositif de vérification selon la revendication 4 ou la revendication 5, le procédé comprenant :
l'utilisation du dispositif de vérification (10) pour réfléchir et émettre des premier et second faisceaux laser (40, 41) ;
(S50) le positionnement d'un écran cible (70) à une première distance (M1) du dispositif de vérification ;
(S52) la détermination des points d'incidence (46, 47) des premier et second faisceaux laser réfléchis sur l'écran cible ;
(S54) le positionnement de l'écran cible à une seconde distance (M2) du dispositif de vérification ;
(S56) la détermination des points d'incidence (48, 49) des premier et second faisceaux laser réfléchis sur l'écran cible ;
(S58) la détermination de la différence d'élévation et d'azimut des premier et second faisceaux laser réfléchis à l'aide des points d'incidence des premier et second faisceaux laser réfléchis sur l'écran cible aux première et seconde distances, et la différence (D) entre les première et seconde distances ; et
(S62) la sortie des données d'étalonnage définissant la configuration attendue des premier et second faisceaux laser réfléchis émis par le dispositif de vérification lorsque le dispositif de vérification est monté sur un véhicule à l'orientation de référence,
dans lequel la première distance (M1) et la seconde distance (M2) sont mesurées au moyen d'au moins deux lasers de référence (42, 43) ou plus.
